# DEMANDE DE BREVET EUROPEEN

(11) **EP 4 714 748 A1**
(43) Date de publication de la demande: **25.03.2026**
(21) Numéro de dépôt: 25199990.0
(22) Date de dépôt: 03.09.2025
(51) Int. Cl.: B60R 7/04

(54) **BOÎTIER DE RANGEMENT POUR VÉHICULE AUTOMOBILE COMPRENANT DEUX COUVERCLES EN ÉQUERRE ET DEUX AXES DE ROTATION**

(30) Priorité: 20.09.2024 FR 2410087
(71) Demandeur: Renault s.a.s, 92100 Boulogne Billancourt (FR)
(72) Inventeur: BUI, Tranh-Tu, 95310 Saint Ouen l'Aumone (FR); DINANT, Bruno, 60110 MERU (FR); LEMONNIER, Matthieu, 78084 Guyancourt (FR)

(57) **Abrégé**

Boîtier de rangement (1) pour véhicule automobile comprenant une structure fixe comportant un châssis externe (6) et un compartiment de rangement, et deux couvercles (3) en équerre aptes à adopter une position fermée (PF) dans laquelle les couvercles (3) en équerre comprennent chacun une surface horizontale supérieure (4a) et une surface verticale latérale (5a) et dans laquelle le compartiment de rangement n'est pas accessible, et une position ouverte dans laquelle les couvercles (3) en équerre comprennent chacun une surface horizontale inférieure et une surface verticale latérale et dans laquelle le compartiment de rangement est accessible.

Chaque couvercle (3) en équerre comprend deux mécanismes de contrôle (8) situés de part et d'autre du couvercle (3) et comportant chacun une barre inférieure et une barre supérieure destinées à provoquer l'ouverture et la fermeture des couvercles (3) en équerre autour de deux axes de rotation de manière que la surface verticale (5a, 4b) et le châssis de la structure (2) du boîtier (1) comprennent des écarts identiques lorsque les couvercles (3) en équerre sont en position fermée (PF) et en position ouverte.

## Description

### Domaine technique

La présente invention concerne de manière générale les rangements pour véhicule automobile et plus particulièrement les boîtiers de rangement comprenant des couvercles en équerre.

Aujourd'hui, les boîtiers de rangement pour véhicule automobile à couvercle en équerre comprennent généralement un axe de rotation leur permettant d'évoluer entre une position fermée et une position ouverte.

En revanche, dans certaines configurations du boîtier, les couvercles en équerre rotatifs autour d'un axe de rotation risquent d'entrer en collision avec la structure fixe du boîtier de rangement. En effet, la rotation d'un boîtier en équerre autour d'un axe de rotation ne permet pas de laisser un écart constant par rapport à la structure du boîtier de rangement, indépendamment de la position dudit boîtier.

### Exposé de l'invention

La présente invention a pour but de proposer une solution qui réponde aux problématiques précitées.

L'invention a donc pour objet un boîtier de rangement pour véhicule automobile comprenant une structure fixe comportant un châssis externe et un compartiment de rangement, et deux couvercles en équerre aptes à adopter une position fermée dans laquelle les couvercles en équerre comprennent chacun une surface horizontale supérieure et une surface verticale latérale et dans laquelle le compartiment de rangement n'est pas accessible, et une position ouverte dans laquelle les couvercles en équerre comprennent chacun une surface horizontale inférieure et une surface verticale latérale et dans laquelle le compartiment de rangement est accessible. Chaque couvercle en équerre comprend deux mécanismes de contrôle situés de part et d'autre du couvercle et comportant chacun une barre inférieure et une barre supérieure destinées à provoquer l'ouverture et la fermeture des couvercles en équerre autour de deux axes de rotation de manière que la surface verticale et le châssis de la structure du boîtier comprennent des écarts identiques lorsque les couvercles en équerre sont en position fermée et en position ouverte.

Avantageusement, le boîtier de rangement comprend deux plans de symétrie.

Selon un mode de réalisation, chaque mécanisme de contrôle comprend une plaque de support fixée à une extrémité du couvercle.

Avantageusement, la barre inférieure comprend deux extrémités, une des extrémités étant reliée à la plaque de support du mécanisme de contrôle et l'autre des extrémités étant reliée à la structure du boîtier de rangement.

Selon un mode de réalisation, la barre supérieure comprend deux extrémités, une des extrémités étant reliée à la plaque de support du mécanisme de contrôle et l'autre des extrémités étant reliée au châssis externe du boîtier de rangement.

Avantageusement, chaque plaque de support du mécanisme de contrôle comprend une fente apte à permettre le mouvement du couvercle entraîné par la barre inférieure.

Selon un mode de réalisation, chaque mécanisme de contrôle est alimenté électriquement par un moteur qui entraine une des extrémités d'une des barres du mécanisme de contrôle.

Avantageusement, chaque mécanisme de contrôle comprend des butées aptes à arrêter précisément le couvercle en position ouverte et fermée.

Selon un mode de réalisation, chaque mécanisme de contrôle comprend un ressort à force constante.

L'invention a aussi pour objet un véhicule automobile comprenant un boîtier de rangement tel que défini ci-dessus.

### Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :
- La [Fig. 1A] est une vue en perspective d'un boîtier de rangement en position fermée ;
- La [Fig. 1B] est une vue en perspective d'un boîtier de rangement en position ouverte ;
- La [Fig. 2A] est une vue en coupe d'un boîtier de rangement en position fermée ;
- La [Fig. 2B] est une vue en coupe d'un boîtier de rangement en position ouverte ;
- La [Fig. 3] est une vue de face d'un boîtier de rangement en position fermée ; et
- La [Fig. 4] est une vue de face d'un boîtier de rangement en position fermée selon un mode de réalisation différent de la vue de la figure 3.

### Description détaillée

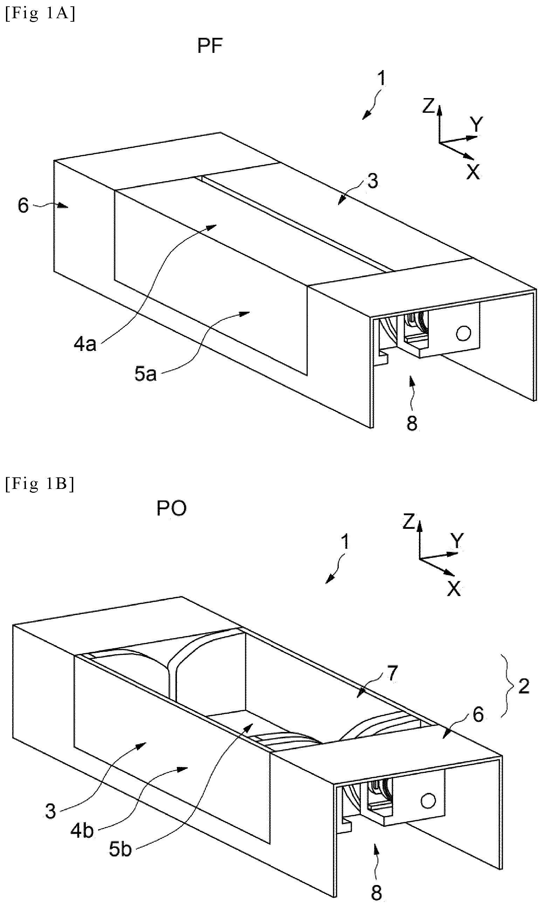

Sur les figures 1A et 1B, on a représenté un boîtier de rangement pour véhicule automobile désigné par la référence numérique 1. Le véhicule automobile s'inscrit dans un repère orthogonal X, Y, Z. L'axe X désigne la direction longitudinale avant-arrière du véhicule, l'axe Y désigne la direction transversale orientée vers la gauche du véhicule observé de face, selon la direction X, et l'axe Z désigne la direction verticale, orientée vers le haut du véhicule.

Le boîtier de rangement 1 comprend une structure fixe 2 et deux couvercles 3 en équerre aptes à adopter une position fermée PF et une position ouverte PO. Lorsque les couvercles 3 en équerre sont en position fermée PF, ils comprennent chacun une surface horizontale supérieure 4a et une surface verticale latérale 5a. Les surfaces horizontales supérieures 4a des couvercles 3 sont en contact pour former un couvercle horizontal lisse lorsque les couvercles 3 sont en position fermée PF. Lorsque les couvercles 3 en équerre sont en position ouverte PO, ils comprennent chacun une surface horizontale inférieure 5b et une surface verticale latérale 4b.

La structure fixe 2 comprend un châssis externe 6 et un compartiment de rangement interne 7, dans lequel l'utilisateur peut stocker du matériel. La structure 2 comprend également une partie interne située entre le compartiment de rangement 7 et les couvercles 3.

Selon le mode de réalisation illustré sur les figures, le boîtier de rangement 1 est un parallélépipède longitudinal d'axe X comprenant une face avant et une face arrière. Le boîtier 1 comprend un plan de symétrie longitudinal et un plan de symétrie transversal.

Chaque couvercle 3 en équerre comprend une paire de mécanismes de contrôle 8 situés longitudinalement de part et d'autre dudit couvercle 3. En particulier, le boîtier de rangement 1 comprend deux couvercles 3 en équerre et deux paires de mécanismes de contrôle 8 positionnés symétriquement de part et d'autre d'une section longitudinale du boîtier 1. Les mécanismes de contrôle 8 d'une paire sont également positionnés symétriquement de part et d'autre d'une section transversale du boîtier de rangement 1.

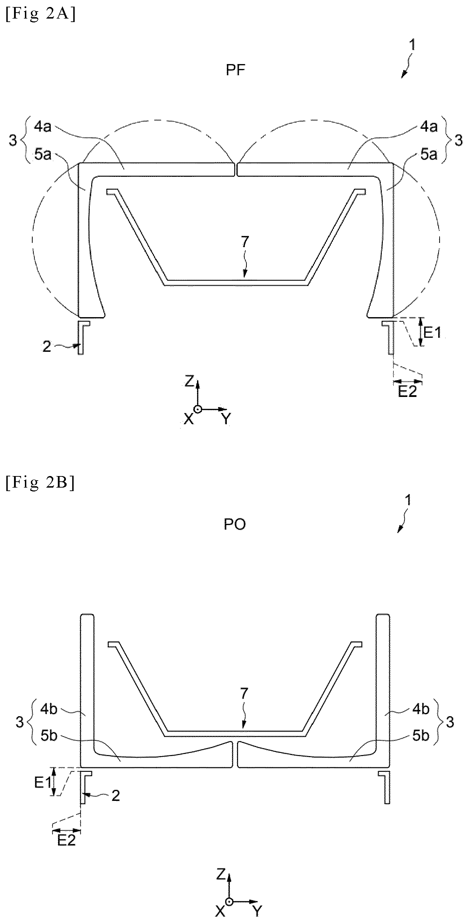

Tel qu'illustré sur la figure 2A, lorsque les couvercles 3 en équerre sont en position fermée PF, le compartiment de rangement 7 n'est pas accessible par l'utilisateur et le boîtier de rangement 1 est donc en position fermée PF. En revanche, tel qu'illustré sur la figure 2B, le compartiment de rangement 7 est accessible lorsque les couvercles 3 en équerre sont en position ouverte PO. Dans cette configuration, le boîtier de rangement 1 est donc également en position ouverte PO.

Les surfaces horizontales supérieures 4a du boîtier 1 en position fermée PF deviennent les surfaces verticales latérales 4b du boîtier 1 en position ouverte PO et les surfaces verticales latérales 5a du boîtier 1 en position fermée PF deviennent les surfaces horizontales inférieures 5b du boîtier 1 en position ouverte PO. En position ouverte PO, les surfaces horizontales inférieures 5b sont en dessous du compartiment de rangement 7.

Les surfaces verticales latérales 4b, 5a des couvercles 3 comprennent un écart vertical E1 selon la direction Z et un écart transversal E2 selon la direction Y avec la structure 2 du boîtier 1.

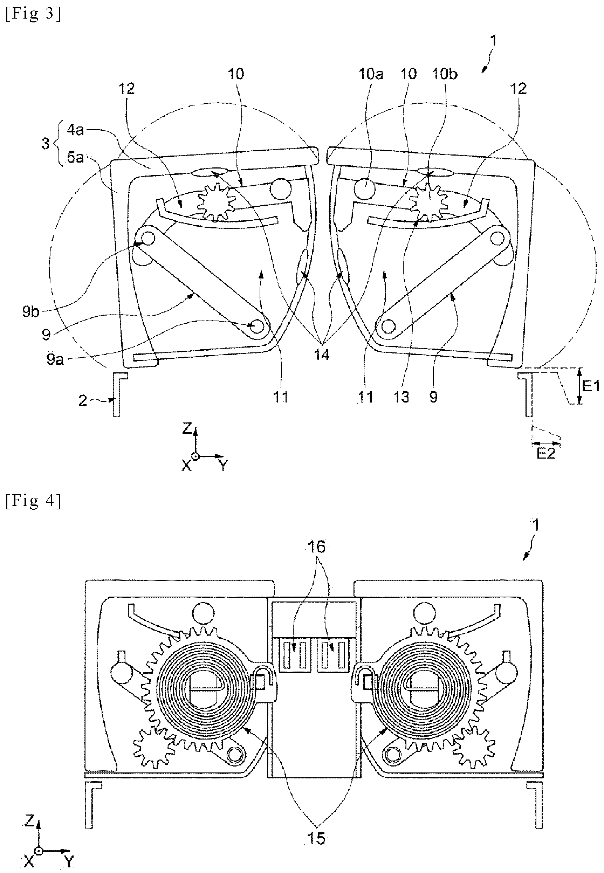

La paire de mécanismes de contrôle 8 permet de contrôler l'ouverture et la fermeture du couvercle 3. Chaque mécanisme de contrôle 8 comprend à cet effet une barre inférieure 9 et une barre supérieure 10 de contrôle. Le boîtier de rangement 1 comprend ainsi quatre barres 9, 10 de contrôle de l'ouverture et de la fermeture des couvercles 3 au niveau de sa face avant, tel qu'illustré sur la figure 3, et quatre barres 9, 10 de contrôle de l'ouverture et de la fermeture des couvercles 3 au niveau de sa face arrière.

Les barres supérieures 10 et inférieures 9 sont destinées à commander l'ouverture et la fermeture des couvercles 3 en équerre autour de deux axes de rotation de sorte que la surface verticale 4b, 5a et le châssis 6 de la structure 2 du boîtier 1 comprennent un écart vertical E1 et un écart transversal E2 identiques lorsque les couvercles 3 en équerre sont en position fermée PF et en position ouverte PO.

Les mécanismes de contrôle 8 comprennent en outre chacun une plaque de support 11 fixée à une extrémité du couvercle 3, reliée aux surfaces horizontale et verticale 4a, 5a, 4b, 5b du couvercle 3. Plus précisément, le boîtier de rangement 1 comprend deux plaques de support 11 au niveau de sa face avant et deux plaques de support 11 au niveau de sa face arrière.

La barre inférieure 9 du mécanisme de contrôle 8 comprend deux extrémités, une première extrémité 9a étant reliée à la plaque de support 11 et une deuxième extrémité 9b étant reliée à la structure 2 du boîtier de rangement 1, plus précisément à la partie interne de la structure 2 du boîtier 1.

La barre supérieure 10 du mécanisme de contrôle 8 comprend deux extrémités, une première extrémité 10a étant reliée à la plaque de support 11 et une deuxième extrémité 10b étant reliée à la structure 2 du boîtier de rangement 1, plus précisément au châssis externe 6 de la structure 2 du boîtier 1.

Les extrémités 9b, 10b des barres inférieure 9 et supérieure 10 reliées à la structure 2 du boîtier de rangement 1 sont fixes et offrent deux axes de rotation aux couvercles 3. Les extrémités 9a, 10a des barres inférieure 9 et supérieure 10 reliées à la plaque de support 11 sont mobiles et permettent d'entraîner le mouvement de la plaque de support 11 et du couvercle 3 autour des axes de rotation créés par les extrémités fixes 9a, 10b des barres 9, 10. Les extrémités 9a, 9b, 10a, 10b des barres 9, 10 comprennent des liaisons pivots.

Les plaques de support 11 comprennent chacune une fente 12 apte à permettre le mouvement du couvercle 3 entraîné par la barre inférieure 9.

Selon le mode de réalisation illustré sur les figures, le boîtier de rangement 1 est alimenté électriquement par un moteur. Le mécanisme de contrôle comprend ainsi un moteur et un système d'engrenage 13, le moteur étant monté sur le châssis externe 6 de la structure 2 du boîtier 1. Le système d'engrenage 13 est fixé à la deuxième extrémité 10b reliée au châssis externe 6 de la barre supérieure 10. Le moteur est apte à entraîner le système d'engrenage qui lui-même entraîne la barre supérieure 10. Lorsque la barre supérieure 10 est en mouvement, elle entraîne une rotation de la plaque de support 11 autour de l'axe de rotation créé par l'extrémité 10b de la barre supérieure 10 reliée au châssis externe 6 du boîtier 1. La barre inférieure 9 est ainsi entraînée et la fente 12 de la plaque de support 11 permet la rotation de ladite plaque 11 malgré l'extrémité 9b fixe de la barre inférieure 9 reliée à la structure 2 du boîtier 1.

Finalement, le jeu des barres 9, 10 de contrôle entraîne un mouvement particulier de l'ensemble comprenant une paire de plaques de support 11 et le couvercle 3, permettant d'éviter les collisions avec les pièces environnantes et en particulier de garder des écarts verticaux E1 et transversaux E2 constants avec la structure 2 du boîtier de rangement 1.

Le mouvement de l'ensemble comprenant une paire de plaques de support 11 et le couvercle 3 effectue donc d'abord une translation verticale vers le haut du véhicule, puis une rotation autour des deux axes de rotation et une translation verticale vers le bas du véhicule.

Le mécanisme de contrôle 8 comprend en outre des butées 14 aptes à arrêter précisément le couvercle 3 en position ouverte PO et en position fermée PF.

Tel qu'illustré sur la figure 4, le boîtier de rangement 1 comprend également des ressorts à force constante 15. En particulier, chaque mécanisme de contrôle 8 comprend un ressort à force constante 15 permettant de maintenir une tension uniforme au cours du fonctionnement du système d'engrenage 13. Les ressorts à force constante 15 permettent aussi d'absorber les vibrations induites par le mouvement des systèmes d'engrenage 13.

Dans un autre mode de réalisation du boîtier de rangement 1, celui-ci comprend un système à double pression 16 qui permet une ouverture et une fermeture manuelle dudit boîtier 1. L'utilisateur effectue une première pression sur les couvercles 3 pour qu'ils s'ouvrent et une deuxième pression pour qu'ils se ferment.

Bien entendu, on ne sort pas du cadre de l'invention lorsque le boîtier de rangement 1 présente une composition différente. Il est ainsi possible de concevoir un boîtier de rangement 1 dans lequel le moteur est positionné sur la partie interne de la structure 2 et entraîne la barre inférieure 9.

Le boîtier de rangement 1 permet ainsi une ouverture et fermeture des couvercles 3 sans collision avec la structure environnante et apporte des écarts constants E1, E2 entre lesdits couvercles 3 et ladite structure environnante, indépendamment de la position ouverte PO ou fermée PF du boîtier de rangement 1.

Le boîtier de rangement 1 est de préférence intégré à un élément intérieur de véhicule, tel qu'une console centrale, un panneau de porte, un siège.

## Revendications

1. Boîtier de rangement (1) pour véhicule automobile comprenant une structure fixe (2) comportant un châssis externe (6) et un compartiment de rangement (7), et deux couvercles (3) en équerre aptes à adopter une position fermée (PF) dans laquelle les couvercles (3) en équerre comprennent chacun une surface horizontale supérieure (4a) et une surface verticale latérale (5a) et dans laquelle le compartiment de rangement (7) n'est pas accessible, et une position ouverte (PO) dans laquelle les couvercles (3) en équerre comprennent chacun une surface horizontale inférieure (5b) et une surface verticale latérale (4b) et dans laquelle le compartiment de rangement (7) est accessible, **caractérisé en ce que** chaque couvercle (3) en équerre comprend deux mécanismes de contrôle (8) situés de part et d'autre du couvercle (3) et comportant chacun une barre inférieure (9) et une barre supérieure (10) destinées à provoquer l'ouverture et la fermeture des couvercles (3) en équerre autour de deux axes de rotation de manière que la surface verticale (5a, 4b) et le châssis (6) de la structure (2) du boîtier (1) comprennent des écarts (E1, E2) identiques lorsque les couvercles (3) en équerre sont en position fermée (PF) et en position ouverte (PO).

2. Boîtier de rangement (1) selon la revendication 1, qui comprend deux plans de symétrie.

3. Boîtier de rangement (1) selon l'une des revendications 1 et 2, dans lequel chaque mécanisme de contrôle (8) comprend une plaque de support (11) fixée à une extrémité du couvercle (3).

4. Boîtier de rangement (1) selon la revendication 3, dans lequel la barre inférieure (9) comprend deux extrémités (9a, 9b), une des extrémités (9a) étant reliée à la plaque de support (11) du mécanisme de contrôle (8) et l'autre des extrémités (9b) étant reliée à la structure (2) du boîtier de rangement (1).

5. Boîtier de rangement (1) selon l'une des revendications 3 et 4, dans lequel la barre supérieure (10) comprend deux extrémités (10a, 10b), une des extrémités (10a) étant reliée à la plaque de support (11) du mécanisme de contrôle (8) et l'autre des extrémités (10b) étant reliée au châssis externe (6) du boîtier de rangement (1).

6. Boîtier de rangement (1) selon l'une quelconque des revendications 3 à 5, dans lequel chaque plaque de support (11) du mécanisme de contrôle (8) comprend une fente (12) apte à permettre le mouvement du couvercle (3) entraîné par la barre inférieure (9).

7. Boîtier de rangement (1) selon l'une des revendications 1 à 6, dans lequel chaque mécanisme de contrôle (8) est alimenté électriquement par un moteur qui entraine une des extrémités (9b, 10b) d'une des barres (9, 10) du mécanisme de contrôle (8).

8. Boîtier de rangement (1) selon l'une quelconque des revendications 1 à 7, dans lequel chaque mécanisme de contrôle (8) comprend des butées (14) aptes à arrêter précisément le couvercle (3) en position ouverte et fermée (PO, PF).

9. Boîtier de rangement (1) selon l'une quelconque des revendications 1 à 8, dans lequel chaque mécanisme de contrôle (8) comprend un ressort à force constante (15).

10. Véhicule automobile comprenant un boîtier de rangement (1) selon l'une quelconque des revendications 1 à 9.
